# EUROPÄISCHE PATENTANMELDUNG

(11) **EP 4 389 842 A1**
(43) Veröffentlichungstag der Anmeldung: **26.06.2024**
(21) Anmeldenummer: 23216201.6
(22) Anmeldetag: 13.12.2023
(51) Int. Cl.: C09J 7/25, C09J 7/38

(54) **NACHHALTIGES HAFTKLEBEBAND**

(30) Priorität: 21.12.2022 DE 102022134275
(71) Anmelder: TESA SE, 22848 Norderstedt (DE)
(72) Erfinder: NEUBERT, Ingo, 22848 Norderstedt (DE)
(74) Vertreter: tesa SE

(57) **Zusammenfassung**

Die Erfindung betrifft ein Haftklebeband, umfassend: i) eine Trägerschicht aus einem Trägermaterial, wobei das Trägermaterial Polyethylenfuranoat umfasst, und ii) zumindest eine auf der Trägerschicht angeordnete Klebeschicht, umfassend eine Haftklebemasse, wobei die Haftklebemasse ein oder mehrere (Co-)Polymere umfasst, die ausgewählt sind aus der Gruppe bestehend aus Dienkautschuken und Poly(meth)acrylaten, und wobei die Trägerschicht eine mono-axial oder biaxial orientierte Trägerschicht ist.

## Beschreibung

Die Erfindung betrifft ein Haftklebeband und ein Verfahren zur Herstellung eines entsprechenden Haftklebebandes. Offenbart wird zudem die Verwendung einer mono-axial oder bi-axial verstreckten Materialfolie aus einem Trägermaterial umfassend Polyethylenfuranoat als Trägerschicht in Haftklebebändern mit einer Kautschuk basierten oder (Meth)acrylat basierten Haftklebemasse.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar, deren Klebewirkung auf den eingesetzten Klebemassen beruht. Der Einsatz von Klebebändern ist mit vielen Vorteilen verbunden, die diese Technologie für den Einsatz in vielen Industriezweigen, beispielsweise in der Elektronik- oder Fahrzeugindustrie prädestinieren.

In den meisten Fällen sind solche Klebebänder dabei Mehrkomponentenmaterialien, welche neben der Klebemasse auch eine Trägerschicht umfassen, die zumeist aus einem Kunststoff ausgebildet ist. Der in den Trägerschichten zur Anwendung kommende Kunststoff basiert häufig auf fossilen Ressourcen. Im Lichte eines steigenden Bewusstseins für die Notwendigkeit eines nachhaltigeren Wirtschaftens und eines schonenderen Umgangs mit fossilen Ressourcen wird dies regelmäßig als nachteilig empfunden.

Vor diesem Hintergrund besteht im Bereich der Klebtechnik seit einigen Jahren ein Bestreben danach, die Nachhaltigkeit von Klebebändern zu erhöhen und insbesondere den Bedarf an fossilen Ressourcen bei deren Herstellung zu vermindern.

Einer der hierbei zur Anwendung kommenden Ansätze ist die Verwendung von Trägermaterialien, welche zumindest teilweise aus recyceltem Kunststoff hergestellt sind. Eine vielversprechende Alternative zu diesem Vorgehen ist der Einsatz von biobasierten Kunststoffen. Solche biobasierten Kunststoffe werden nicht -beziehungsweise nicht vollständig- aus fossilen Ausgangsmaterialien hergestellt, sondern enthalten Bausteine, welche aus Biomasse gewonnen wurden. In den letzten Jahren wurde insoweit eine große Bandbreite an biobasierten Kunststoffen und Verfahren zu deren Herstellung entwickelt, die heutzutage in verschiedenen Bereichen der Technik eingesetzt werden. Hierzu gehören beispielsweise Polylactide (PLA), Celluloseacetate (CA) oder thermoplastische Stärke (TPS).

Ein Vertreter der biobasierten Kunststoffe, welcher wegen seiner prinzipiellen Ähnlichkeit zu dem etablierten Kunststoff Polyethylenterephthalat (PET), zunehmend in den Fokus der Aufmerksamkeit rückt, ist der auf 2,5-Furandicarbonsäure (FDCA) basierende Polyester Polyethylenfuranoat (PEF). Zur Herstellung von PEF und des Vorläufermoleküls FDCA wurden in der Vergangenheit eine Vielzahl von Syntheseverfahren entwickelt. Hierbei kann beispielsweise die Umsetzung von Maissirup (sogenannter "high fructose corn syrup", HFCS) zu Hydroxymethylfurfural (5-HMF) mit anschließender Oxidation zu 2,5-Furandicarbonsäure und nachfolgender Umsetzung mit Ethylenglycol zum Polyester erfolgen. Informationen zum diesbezüglichen technologischen Hintergrund sind beispielsweise in der WO 2010077133 A1, der EP 2934890 A1, der EP 3438164 A1, der EP 3398773 A1, der US 2013011631 A1 oder der US 2013344345 A1 offenbart.

Viele der am Markt verfügbaren biobasierten Polymere haben sich bis zum heutigen Tage im Bereich der Klebtechnik nicht als Trägermaterialien für Trägerschichten durchgesetzt, obwohl sich durch ihren Einsatz potentiell die Abhängigkeit von fossilen Rohstoffen reduzieren ließe.

In vielen Fällen ist dies dadurch bedingt, dass an die Trägerschichten von Klebebändern und deren Eigenschaften häufig sehr hohe Anforderungen gestellt werden. Neben den physikalisch-chemischen Eigenschaften, beispielsweise hinsichtlich der chemischen Beständigkeit, betrifft dies insbesondere die mechanischen Eigenschaften der Trägerschichten, beispielsweise die Reißfestigkeit, die Biegesteifigkeit und die Zugfestigkeit. Diese Eigenschaften sind für die Herstellung leistungsfähiger Klebebänder von besonderer Relevanz, da die auf den Trägerschichten angeordnete Klebeschicht, welche den Klebebändern die Klebrigkeit verleiht, hinsichtlich dieser Eigenschaften regelmäßig einen so geringen Beitrag leistet, dass die Gesamteigenschaften maßgeblich von dem Trägermaterial der Trägerschicht beeinflusst werden. Zudem ist es insbesondere bei Haftklebebändern erforderlich, dass die eingesetzten Klebeschichten eine vorteilhafte Adhäsion an dem als Trägermaterial verwendeten Kunststoff zeigen, sodass beim Abziehen des Haftklebebandes kein unerwünschtes Aufreißen des Verbundes an der Grenzschicht zwischen Klebeschicht und Trägerschicht erfolgt.

Die vorstehenden Anforderungskriterien werden dabei regelmäßig noch dadurch verschärft, dass die jeweiligen Kunststoffe der Trägerschicht für viele Hochleistungsanwendungen lediglich als sehr dünne Trägerfolien eingesetzt werden sollen und zudem häufig auch für Anwendungen geeignet sein müssen, bei denen sie langfristig erhöhten Temperaturen ausgesetzt sind, sodass die Vorgaben für die mechanischen Eigenschaften insbesondere auch bei diesen erhöhten Temperaturen gewährleistet sein müssen. Eine vorteilhafte Temperaturbeständigkeit ist dabei zudem auch bei der Herstellung der Klebebänder relevant, da bei den notwendigen Beschichtungsschritten, beispielsweise im Rahmen einer Extrusionsbeschichtung, oder bei Trocknungsprozessen im Falle von lösungsmittelbasierten Beschichtungen, ebenfalls erhöhte Temperaturen zur Anwendung kommen. Wichtig sind insoweit hinsichtlich der zumeist eher kurzen thermischen Belastung, beispielsweise im Rahmen von Sekunden oder Minuten, insbesondere eine vorteilhafte Zugfestigkeit und ein geringer Schrumpf.

Nach Einschätzung der Erfinder genügen die meisten der am Markt verfügbaren Folienprodukte aus biobasierten Kunststoffen diesen Anforderungen nicht oder zumindest nicht vollständig. Beispielsweise sind Folien aus Polymilchsäure zwar 100 % biobasiert und weisen entsprechend einen guten COs-Fußabdruck auf, allerdings wird insbesondere die Temperaturstabilität, die Weiterreißfestigkeit und die Zugfestigkeit solcher Folien häufig als unzureichend bewertet, sodass eine Verwendung als Trägerfolie, insbesondere für Hochleistungsanwendungen deutlich eingeschränkt ist. Insbesondere der Umstand, dass solche PLA-Folien bei Temperaturen von 80 °C einen erheblichen Schrumpf zeigen, erschwert den Herstellungsprozess der Klebebänder.

Die vorstehend beschriebenen Anforderungen gelten insoweit jedoch nicht nur für biobasierte Kunststoffe, sondern stellen auch Auswahlkriterien für die Verwendung von Kunststoffen aus fossilen Quellen dar. Auch viele dieser Materialien werden in der Praxis nicht sämtlichen Anforderungen gerecht und werden in vielen Fällen hinsichtlich zumindest ausgewählter Aspekte als nachteilig empfunden. Beispielsweise zeigen viele der biaxial verstreckten Folien, beispielsweise aus Polypropylen oder Polyethylenterephthalat, unvorteilhafte Schwächen in der Weiterreißfestigkeit. Auch wenn in einigen Fällen durch eine monoaxiale Verstreckung dieser Kunststoffe Folien erhalten werden können, bei denen die Weiterreißfestigkeit verbessert ist, zeigt sich bei solchen Folien in vielen Fällen ein unerwünschtes Zerfasern, welches auch als "Splicing" und "Shredding" bezeichnet wird. Somit besteht im Bereich der Technik prinzipiell auch bei der Verwendung von Kunststoffen aus fossilen Materialien ein steter Verbesserungsbedarf.

Die primäre Aufgabe der vorliegenden Erfindung war es, die Nachteile des Standes der Technik zu beseitigen oder zumindest zu verringern.

Insbesondere war es eine Aufgabe der vorliegenden Erfindung, ein Haftklebeband und ein Verfahren zur Herstellung eines entsprechenden Haftklebebandes anzugeben, welches einen vorteilhaften COs-Fußabdruck aufweist und durch das die Abhängigkeit von fossilen Ressourcen bei der Klebebandherstellung verringert werden kann.

Hierbei war es eine Aufgabe der vorliegenden Erfindung, dass die anzugebenden Klebebänder für Anwendungen mit hoher mechanischer Belastung geeignet sein sollten und auch bei Verwendung von sehr dünnen Trägerfolien und/oder sehr schmalen Klebeelementen, beispielsweise Stanzlingen, vorteilhafte Anwendungseigenschaften zeigen sollten, insbesondere hinsichtlich der Zugfestigkeit, der Reißfestigkeit, der Weiterreißfestigkeit und der Widerstandsfähigkeit gegen Belastung unter Vibration und Scherung.

Insoweit war es eine Aufgabe der vorliegenden Erfindung, dass die anzugebenden Klebebänder und deren Trägerschichten über eine vorteilhafte Temperaturstabilität verfügen und dadurch nicht nur effizient herzustellen sein sollten, sondern auch für Anwendungen unter erhöhten Temperaturbelastungen besonders geeignet sein sollten.

Es war eine wünschenswerte Vorgabe der vorliegenden Erfindung, dass mit den anzugebenen Klebebändern, trotz einer Verbesserung im COs-Fußabdruck, auch gegenüber Klebebändern mit Trägerschichten aus herkömmlichen Kunststoffen aus fossilen Ausgangsmaterialien verbesserte Eigenschaften erreicht werden sollten, insbesondere hinsichtlich der Weiterreißfestigkeit und der Zugfestigkeit. Hierbei war es eine weitere wünschenswerte Vorgabe, dass die anzugebenden Klebebänder auch gegenüber Klebebändern auf der Basis von fossilen Ressourcen eine vorteilhafte Weiterreißfestigkeit und eine verringerte Neigung zum Zerfasern zeigen sollten.

Es war eine weitere Aufgabe der vorliegenden Erfindung, dass die anzugebenden Klebebänder zudem ausgezeichnete klebtechnische Eigenschaften aufweisen sollten, wobei wünschenswerterweise insbesondere durch eine vorteilhafte Adhäsion zwischen der Klebeschicht und dem verwendeten Trägermaterial sichergestellt werden sollte, dass es nicht zu einem adhäsiven Versagen an der Grenzschicht zwischen Trägerschicht und Klebeschicht kommt.

In Bezug auf das Herstellungsverfahren war es eine Aufgabe der vorliegenden Erfindung, dass die Herstellung der Klebebänder möglichst weitgehend mit solchen Vorrichtungen und Verfahren erfolgen können sollte, die bereits heute im Bereich der Klebebandherstellung zum Einsatz kommen, sodass die damit herstellbaren Klebebänder insbesondere unter Verwendung typischer Beschichtungsverfahren, insbesondere auch bei erhöhten Temperaturen, herstellbar sein sollten.

Der Erfinder hat nunmehr gefunden, dass sich die vorstehend beschriebenen Aufgaben überraschenderweise lösen lassen, wenn ein Haftklebeband bereitgestellt wird, welches eine PEF basierte, verstreckte Trägerschicht umfasst, wenn diese mit einer spezifischen Haftklebemasse kombiniert wird, welche auf Dienkautschuken oder Poly(meth)acrylaten basiert, wie es in den Ansprüchen definiert ist.

Hierdurch werden überaschenderweise Haftklebebänder mit ausgezeichneten physikalisch-chemischen sowie mechanischen Eigenschaften erhalten, welche einen überaus vorteilhaften COs-Fußabdruck aufweisen und dabei hinsichtlich vieler anwendungsrelevanter Eigenschaften insbesondere auch gegenüber solchen Klebebändern verbessert sind, welche Trägerschichten aus Kunststoffen umfassen, die auf fossilen Materialien basieren.

In vorteilhafter Weise werden hierdurch auch in Kombination mit biobasierten Haftklebemassen, beispielsweise auf der Basis von Naturkautschuken, Polyacrylaten mit biobasierten Alkoholen oder Mischungen von Polyacrylaten und Synthesekautschuken (bspw. nach dem sogenannten "Mass-Balance-Ansatz" leistungsfähige Haftklebebänder erhalten, welche beispielsweise lösemittelfrei über ein "hot-melt"-erfahren oder durch Beschichtung aus einer wässrigen Dispersion hergestellt werden können.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren und Verwendungen ergeben sich aus den Merkmalen bevorzugter Haftklebebänder.

Insoweit nachfolgend für ein Element, beispielsweise für die (Co-)Polymere oder das Trägermaterial, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft ein Haftklebeband, umfassend:
i) eine Trägerschicht aus einem Trägermaterial, wobei das Trägermaterial Polyethylenfuranoat umfasst, und
ii) zumindest eine auf der Trägerschicht angeordnete Klebeschicht, umfassend eine Haftklebemasse,
wobei die Haftklebemasse ein oder mehrere (Co-)Polymere umfasst, die ausgewählt sind aus der Gruppe bestehend aus Dienkautschuken und Poly(meth)acrylaten, und wobei die Trägerschicht eine mono-axial oder bi-axial orientierte Trägerschicht ist.

Haftklebebänder, d.h. Klebebänder, bei denen eine Haftklebemasse für die Klebwirkung sorgt, die bei üblichen Umgebungsbedingungen dauerhaft klebrig sowie klebfähig ist, sind dem Fachmann im Bereich der Klebtechnik umfassend bekannt. Entsprechende Haftklebebänder können durch Druck auf ein Substrat aufgebracht werden und bleiben dort haften, lassen sich später jedoch mehr oder weniger rückstandsfrei wieder entfernen.

Der Ausdruck Haftklebeband bezeichnet im Rahmen der vorliegenden Erfindung solche Artikel, die gemeinhin auch als Selbstklebeartikel bezeichnet werden. Hierbei ist der Ausdruck Haftklebeband breit auszulegen und umfasst in Übereinstimmung mit dem fachmännischen Verständnis alle dünnen, flächigen Gebilde, d.h. Gebilde mit einer überwiegenden Ausdehnung in zwei Dimensionen, insbesondere Folien, Folienabschnitte und Etiketten, jedoch besonders bevorzugt Klebebänder mit ausgedehnter Länge und begrenzter Breite, wobei entsprechende Haftklebeelemente beispielsweise häufig in der Form von Rollen vertrieben werden. Beispielhaft ist ein erfindungsgemäßes Haftklebeband, wobei das Haftklebeband ein einseitiges oder doppelseitiges, bevorzugt doppelseitiges, Haftklebeband ist. Beispielhaft ist zusätzlich oder alternativ ein erfindungsgemäßes Haftklebeband, wobei das Haftklebeband eine mittlere Dicke im Bereich von 50 bis 200 µm, bevorzugt im Bereich von 70 bis 120 µm, aufweist.

Das erfindungsgemäße Haftklebeband umfasst eine Trägerschicht und zumindest eine auf der Trägerschicht angeordnete Klebeschicht. Erfindungsgemäß umfasst die Trägerschicht ein Trägermaterial.

Aufgrund der deutlich höheren Zugfestigkeit kann die Dicke der PEF basierten Trägerschicht gegenüber vielen herkömmlichen Materialien reduziert werden, beispielsweise um etwa 10 bis 20 %. Die hat ebenfalls einen deutlichen Effekt auf die Reduzierung von CO₂ Emission. Bevorzugt ist insoweit ein erfindungsgemäßes Haftklebeband, wobei die Trägerschicht eine mittlere Dicke im Bereich von 10 bis 150 µm, bevorzugt im Bereich von 15 bis 100 µm, aufweist.

Der Ausdruck Trägermaterial bezeichnet im Rahmen der vorliegenden Erfindung hierbei das Material, aus dem die Trägerschicht ausgebildet ist. Der Fachmann versteht insoweit, dass es sich bei dem Trägermaterial um einen Kunststoff handeln wird. Das Trägermaterial umfasst erfindungsgemäß Polyethylenfuranoat, welches auch als PEF bezeichnet wird. Polyethylenfuranoat an sich ist dem Fachmann als Material bekannt und kann mit verschiedenen Verfahren hergestellt werden, wie sie beispielsweise vorstehend im Stand der Technik offenbart sind.

Polyethylenfuranoat ist ein biobasierter Kunststoff, welcher vorteilhafterweise auch aus 100 % biologischen Ausgangsmaterialien hergestellt werden kann.

Der Fachmann versteht, dass bei der Herstellung von Polyethylenfuranoat durch Polymerisation der Monomereinheiten FDCA und Diethylenglycol im geringen Umfang auch andere Dicarbonsäuren und/oder Diole, insbesondere Oligomere von Ethylenglycol in die Polymerkette des Polyethylenfuranoats eingebaut werden können, ohne dass sich die physikalisch-chemischen Eigenschaften des Polyethylenfuranoats wesentlich ändern, beispielsweise wenn die zur Polymerisation verwendete Anlage noch mit geringen Spuren an Terephthalsäure verunreinigt ist. Auch wenn es sich bei dem resultierenden Produkt strenggenommen um Co-Polymere handeln würde, spricht der Fachmann, sofern der Anteil an Fremdbestandteilen nicht zu hoch ist, immer noch von Polyethylenfuranoat. Im Rahmen der vorliegenden Erfindung umfasst der Ausdruck Polyethylenfuranoat entsprechend auch PEF basierte Co-Polymere, sofern der kombinierte Massenanteil von 2,5-Furandicarbonsäure und Ethylenglycol abgeleiteten Monomehreinheiten des Polymers bei 95 % oder mehr, bevorzugt 99 % oder mehr, besonders bevorzugt 99,9 % oder mehr, liegt, bezogen auf die Masse des Co-Polymers.

Auch wenn es zumindest in der Theorie denkbar wäre, Polyethylenfuranoat über spezifische Syntheserouten auch aus fossilen Materialien herzustellen, versteht der Fachmann zwanglos, dass dies im Rahmen der vorliegenden Erfindung nicht zweckmäßig ist, da damit die vorteilhaft verringerte Abhängigkeit von fossilen Ressourcen sowie der verbesserte COs-Fußabdruck als Vorteil entfallen würden. Für im Wesentlichen alle Ausführungsformen relevant ist entsprechend ein erfindungsgemäßes Haftklebeband, wobei das Polyethylenfuranoat zumindest teilweise, bevorzugt überwiegend, besonders bevorzugt im Wesentlichen vollständig, biobasiertes Polyethylenfuranoat ist. Dies bedeutet, dass entsprechendes Polyethylenfuranoat aus nachwachsenden Rohstoffen hergestellt ist. Das Ausmaß der Herstellung aus nachwachsenden Rohstoffen lässt sich dabei über die ¹⁴C-Radiocarbonmethode gemäß ASTMD 6866-22 bestimmen. Bevorzugt ist entsprechend ein erfindungsgemäßes Haftklebeband, wobei das Trägermaterial zu 50 % oder mehr, bevorzugt zu 70 % oder mehr, besonders bevorzugt zu 90 % oder mehr, ganz besonders bevorzugt zu 95 % oder mehr, aus nachwachsenden Rohstoffen, bevorzugt pflanzlichen Rohstoffen, hergestellt ist, bezogen auf die Masse des Trägermaterials, bestimmt gemäß ASTMD 6866-22.

Zumindest grundsätzlich ist es denkbar, dass das Trägermaterial, d.h. das zur Herstellung der Trägerschicht verwendete Material, neben dem Polyethylenfuranoat noch andere Bestandteile umfasst, beispielsweise weitere thermoplastische Kunststoffe, Additive zur Einstellung der Verarbeitungseigenschaften und/oder Füllstoffe. Nach Einschätzung der Erfinder ist es jedoch besonders bevorzugt, wenn die Trägerschicht möglichst weitgehend aus Polyethylenfuranoat. Bevorzugt ist entsprechend ein erfindungsgemäßes Haftklebeband, wobei der kombinierte Massenanteil an Polyethylenfuranoat im Trägermaterial 80 % oder mehr, bevorzugt 90 % oder mehr, besonders bevorzugt 95% oder mehr, ganz besonders bevorzugt im Wesentlichen 100 %, beträgt, bezogen auf die Masse des Trägermaterials.

Hinsichtlich der vorstehend angeführten Additive erachten die Erfinder angesichts der Anwendungsanforderungen an die erfindungsgemäßen Haftklebebänder insbesondere den Einsatz von Schlagzähigkeitsverbesserern (sogenannter "impact modifier") in dem Trägermaterial als besonders vorteilhaft. Nach Einschätzung der Erfinder ist PEF für die angestrebte Anwendung als folienförmige Trägerschicht nämlich teilweise relativ steif und spröde, was durch den Einsatz von Schlagzähigkeitsverbesserern in vorteilhafter Weise verbessert werden kann, sodass besonders vorteilhafte mechanische Eigenschaften erhalten werden können. Bevorzugt ist ein erfindungsgemäßes Haftklebeband, wobei das Trägermaterial einen oder mehrere Schlagzähigkeitsverbesserer umfasst, bevorzugt in einem kombinierten Massenanteil im Bereich von 1 bis 10 %, bevorzugt im Bereich von 2 bis 6 %, bezogen auf die Masse des Trägermaterials, wobei der Schlagzähigkeitsverbesserer bevorzugt ausgewählt ist aus der Gruppe bestehend aus Copolyestern, beispielsweise Copolyestern der Adipin- oder/und Bernsteinsäure, genannt sei insoweit explizit das Polybutylenadipatterephthalat.

Es kann als Vorteil der erfindungsgemäßen Haftklebebänder gesehen werden, dass neben dem Polyethylenfuranoat auch weitere Kunststoffe im Trägermaterial eingesetzt werden können. Insbesondere durch kleine Beimengungen lassen sich in vorteilhafter Weise die physikalisch-chemischen sowie mechanischen Eigenschaften der Trägerschicht gezielter an die jeweiligen Anwendungserfordernisse anpassen. Dabei ist insbesondere die Kombination mit Polyethylenterephthalat eine vielversprechende Möglichkeit, das Trägermaterial für die angestrebten Einsatzzwecke zu optimieren, da sich zwischen PET und PEF eine vorteilhafte Kompatibilität zeigt. Bevorzugt ist entsprechend ein erfindungsgemäßes Haftklebeband, wobei das Trägermaterial Polyethylenterephthalat umfasst, bevorzugt in einem Massenanteil von 30 % oder weniger, bevorzugt von 10 % oder weniger, besonders bevorzugt von 10 % oder weniger, ganz besonders bevorzugt von 5 % oder weniger, bezogen auf die Masse des Trägermaterials.

Durch den Einsatz von biobasiertem Polyethylenfuranoat lässt sich der CO₂-Fußabdruck erfindungsgemäßer Haftklebebänder in vorteilhafter Weise verbessern. Auch wenn PEF ein biobasiertes Polymer ist, wird jedoch die Bioabbaubarkeit von PEF in vielen Fällen als unzureichend bewertet. Entsprechend resultiert die Verwendung von PEF als biobasierten Kunststoff in vielen Fällen in Abfällen, welche beispielsweise nur schlecht kompostiert werden können. Um insoweit die Nachhaltigkeit erfindungsgemäßer Klebebänder noch weiter zu erhöhen, wird vorgeschlagen, dass das Trägermaterial zumindest teilweise aus recyceltem Material hergestellt werden kann, wobei hier insbesondere der Einsatz von Trägermaterialien, welche neben PEF auch PET umfassen, besonders vielversprechend ist. Bevorzugt ist ein erfindungsgemäßes Haftklebeband, wobei das Trägermaterial zu 50 % oder mehr, bevorzugt zu 70 % oder mehr, besonders bevorzugt zu 90 % oder mehr, ganz besonders bevorzugt zu 95 % oder mehr, insbesondere bevorzugt im Wesentlichen zu 100 %, aus recyceltem Material besteht, bezogen auf die Masse des Trägermaterials.

Für die erfindungsgemäßen Haftklebebänder wird keine beliebige Ausgestaltung der PEF basierten Trägerschicht eingesetzt. Vielmehr wird eine spezifisch orientierte Trägerschicht verwendet. Der Ausdruck der mono-axialen oder bi-axial orientierten Trägerschicht ist für den Fachmann dabei verständlich. In Anlehnung an das zur Einstellung der entsprechenden Orientierung verwendete Verfahren spricht der Fachmann insoweit auch von bi-axial beziehungsweise mono-axial verstreckten Materialien. Bei der mono- oder biaxialen Verstreckung wird eine Kunststofffolie, beispielsweise eine Cast- oder Blasfolie, inline in der Folienherstellung oder offline in einem separaten Prozess mittels Walzen oder in einen Wärmekanal auf eine Temperatur oberhalb der Glasübergangstemperatur Tg, insbesondere mehr als 20 °C über Tg, aber unterhalb der Schmelztemperatur Tm des Trägermaterials temperiert. Die Verstreckung findet beispielsweise zwischen zwei oder mehr mit ansteigender Geschwindigkeit laufenden Walzen statt. Die Temperaturführung sollte bei der Verstreckung dabei sehr konstant und homogen sein. Der Faktor der Verstreckung für die mono-axiale Verstreckung in Maschinenrichtung liegt beispielsweise im Bereich von 1:3 bis 1:6 und der Verstreckfaktor in Querrichtung für die bi-axiale Verstreckung liegt beispielsweise im Bereich von 1:3 bis 1:5.

Insgesamt kann hinsichtlich der Verstreckung und der zum Erhalt der entsprechend orientierten Trägerschicht auf die aus dem Stand der Technik bekannten Verfahren zur Verstreckung von Kunststofffolien verwiesen werden, wie sie beispielsweise für PET eingesetzt werden. Nach Einschätzung der Erfinder bieten sowohl die mono-axiale als auch die bi-axiale Verstreckung Vorteile, die in vorteilhaften erfindungsgemäßen Haftklebebändern resultieren. Die Entscheidung zwischen einer mono-axialen und einer bi-axialen Verstreckung sollte der Fachmann dabei im Lichte der jeweiligen Anwendungserfordernisse für das erfindungsgemäße Haftklebeband treffen. Nach Einschätzung der Erfinder sind die mono-axial beziehungsweise bi-axialen Systeme nämlich für unterschiedliche Anwendungen unterschiedlich geeignet.

Bi-axial orientierte Trägerschichten verfügen gegenüber vergleichbaren Kunststoffen aus fossilen Materialen insbesondere über verbesserte Zugfestigkeiten und eine vorteilhafte Bruchdehnung. Es wird angenommen, dass es durch das Orientieren bzw. das Verstrecken zu einer gewissen Kristallisation, wodurch gegenüber einem unverstreckten Material eine vorteilhafte Festigkeit und Temperaturstabilität erreicht wird. Bevorzugt ist in diesem Fall ein erfindungsgemäßes Haftklebeband, wobei die Trägerschicht eine bi-axial verstreckte Trägerschicht ist. Besonders bevorzugt ist dabei ein erfindungsgemäßes Haftklebeband, wobei die Trägerschicht eine bi-axial orientierte Trägerschicht ist, wobei die Trägerschicht eine Zugfestigkeit bei 1 % Dehnung von 40 N/mm² oder mehr, bevorzugt von 50 N/mm² oder mehr, besonders bevorzugt von 60 N/mm² oder mehr, aufweist.

Als besonders bevorzugt beachtet der Erfinder jedoch den Einsatz von mono-axial orientierten Trägerschichten, da entsprechende erfindungsgemäße Klebebänder ausgezeichnete Zugfestigkeit mit besonders vorteilhaften Weiterreißfestigkeiten kombinieren und dabei im Vergleich mit Kunststoffen aus fossilen Ressourcen überraschenderweise kein Zerfasern festgestellt wird. Bevorzugt ist ein erfindungsgemäßes Haftklebeband, wobei die Trägerschicht eine mono-axial verstreckte Trägerschicht ist. Besonders bevorzugt ist dabei ein erfindungsgemäßes Haftklebeband, wobei die Trägerschicht eine mono-axial orientierte Trägerschicht ist, wobei die Trägerschicht eine Zugfestigkeit bei 1 % Dehnung von 90 N/mm² oder mehr, bevorzugt von 100 N/mm² oder mehr, besonders bevorzugt von 110 N/mm² oder mehr, aufweist,

Neben der Trägerschicht umfasst das erfindungsgemäße Haftklebeband eine Klebeschicht, welche eine Haftklebemasse umfasst. Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G') und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G' und G" jeweils zumindest zum Teil im Bereich von 10³ bis 10⁷ Pa liegen.

Bevorzugt ist ein erfindungsgemäßes Haftklebeband, wobei die Klebeschicht eine mittlere Dicke im Bereich von 20 bis 150 µm, bevorzugt im Bereich von 40 bis 100 µm, aufweist. Bevorzugt ist ein erfindungsgemäßes Haftklebeband, wobei das Flächengewicht der Klebeschicht im Haftklebeband im Bereich von 10 bis 100 g/m², bevorzugt im Bereich von 20 bis 50 g/m², liegt.

Bei der in erfindungsgemäßen Haftklebebändern einzusetzende spezifischen Haftklebemasse handelt es sich um eine Haftklebemasse auf der Basis von Dienkautschuken oder Poly(meth)acrylaten, wobei zumindest in der Theorie auch Kombinationen dieser (Co-)Polymere denkbar sind, auch wenn dies weniger bevorzugt ist.

Die Bestandteile der Haftklebemasse werden in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die Haftklebemasse als Co-Polymer ausschließlich Styrol-Isopren-Styrol-Kautschuk umfassen, was bedeuten würde, dass die Haftklebemasse eine Vielzahl der entsprechenden Moleküle umfasst.

In branchenüblicher Weise werden die Massenanteile im Rahmen der vorliegenden Erfindung als kombinierte Massenanteile der einen oder der mehreren Komponenten angegeben, wodurch ausgedrückt wird, dass der Massenanteil der entsprechend ausgebildeten Komponenten zusammengenommen die entsprechenden Kriterien erfüllt, wobei in Abwesenheit anderer Angaben jeweils die Masse der Haftklebemasse das Bezugssystem ist.

Analog zu einem häufig gewählten Vorgehen im Bereich der Technik werden etwaige in der Haftklebemasse enthaltende Füllstoffe, d.h. heterogen in der Haftklebemasse vorliegende, nichtlösliche Bestandteile, wie beispielsweise partikuläre Füllstoffe oder Fasern, im Rahmen der vorliegenden Erfindung nicht der Haftklebemasse zugerechnet, wie es auch nachfolgend weiter definiert wird. Als Bezugssystem für die Masse der Haftklebemasse fungieren entsprechend die Bestandteile der Haftklebemasse, die vom Fachmann zuweilen auch als "Basisformulierung" bezeichnet werden und welche neben den (Co-)Polymeren beispielsweise auch Klebharze oder weitere Additive, beispielsweise Weichmacher umfassen.

Auch wenn, wie nachfolgend weiterführend offenbart, der Einsatz von mit Füllstoffen gefüllten Haftklebemassen möglich ist, erachtet es der Erfinder für besonders vorteilhaft, wenn die Klebeschicht möglichst weitgehend aus der Haftklebemasse besteht. Bevorzugt ist demgemäß ein erfindungsgemäßes Haftklebeband, wobei die Klebeschicht zu 90 % oder mehr, bevorzugt zu 95 % oder mehr, besonders bevorzugt zu 98% oder mehr, ganz besonders bevorzugt im Wesentlichen zu 100 %, aus der Haftklebemasse besteht, bezogen auf die Masse der Klebeschicht.

Dem Erfinder ist es insoweit gelungen, besonders bevorzugte Massenanteile für die erfindungsgemäß einzusetzenden (Co-)Polymere zu identifizieren. Bevorzugt ist nämlich ein erfindungsgemäßes Haftklebeband, wobei der kombinierte Massenanteil der (Co-)Polymere in der Haftklebemasse im Bereich von 35 bis 80 %, besonders bevorzugt im Bereich von 40 bis 75 %, ganz besonders bevorzugt im Bereich von 45 bis 70 %, liegt, bezogen auf die Masse der Haftklebemasse.

Insbesondere zur Einstellung der gewünschten Haftklebrigkeit ist es vorteilhaft, wenn die Haftklebemasse darüber hinaus auch ein oder mehrere Klebharze umfasst. Als Klebharz kann grundsätzlich jedes mit der Haftklebemasse und insbesondere mit dem (Co)-Polymer bzw. den (Co-)Polymeren der Haftklebmasse kompatible Klebharz sein. In einer Ausführungsform ist das Klebharz ausgewählt aus der Gruppe bestehend aus aliphatischen, aromatischen und alkylaromatischen Kohlenwasserstoffharzen, Kohlenwasser¬stoffharzen auf Basis reiner Monomere, hydrierten Kohlenwasserstoffharzen, funktionellen Kohlenwasserstoffharzen und ggf. derivatisierten Naturharzen. Bevorzugt ist das Klebharz ausgewählt aus der Gruppe bestehend aus Pinen-, Inden- und Kolophoniumharzen sowie deren disproportionierten, hydrierten, polymerisierten, veresterten Derivaten und Salzen; aliphatischen und aromatischen Kohlenwasserstoffharzen, Terpenharzen und Terpenphenolharzen sowie C5-, C9- und anderen Kohlenwasserstoffharzen. Besonders bevorzugt ist das Klebharz ausgewählt aus der Gruppe bestehend aus Kolophoniumharzen und Polyterpen basierten Harzen. Diese Klebharze sind vorteilhaft einsetzbar, weil sie zu großen Teilen, insbesondere auch vollständig, aus nachwachsenden Rohstoffen hergestellt bzw. gewonnen werden können.

Nach Einschätzung des Erfinders lassen sich insbesondere durch den Einsatz von Derivaten von Naturharzen wie Pinen-, Inden-, Polyterpen und Kolophoniumharzen in der Kombination mit PEF basierten Trägerschichten ausgezeichnete Ergebnisse erzielen. Besonders bevorzugt ist entsprechend ein erfindungsgemäßes Haftklebeband, wobei die Klebharze ausgewählt sind aus der Gruppe bestehend aus Naturharzen, wobei die Naturharze bevorzugt ausgewählt sind aus der Gruppe bestehend aus Pinen-, Inden-, Polyterpen und Kolophoniumharzen.

Der Erfinder schlägt insoweit besonders geeignete Massenanteile für die Klebharze vor. Bevorzugt ist nämlich ein erfindungsgemäßes Haftklebeband, wobei die Haftklebemasse ein oder mehrere Klebharze umfasst, bevorzugt in kombinierte Massenanteil im Bereich von 20 bis 65 %, bevorzugt im Bereich von 25 bis 60 %, besonders bevorzugt im Bereich von 30 bis 55 %, bezogen auf die Masse der Haftklebemasse.

Sowohl bei den Co-Polymeren als auch bei Klebharzen handelt es sich grundsätzlich um polymere (bzw. im Fall von Klebharzen zuweilen auch um oligomere) Verbindungen, welche teilweise auch auf vergleichbare Gerüstbausteine zurückgreifen, beispielsweise auf Dien-Verbindungen. In der Praxis hat der Fachmann jedoch keinerlei Probleme, Co-Polymere wie beispielsweise Dienkautschuke, und Klebharze voneinander zu unterscheiden. Diese Verbindungen werden nicht nur kommerziell unter den entsprechenden Stichworten vertrieben und in den Fachkreisen auch klar als solche bezeichnet, sondern lassen sich vom Fachmann in der Praxis auch zwanglos anhand ihrer Eigenschaften unterscheiden. Ein typisches Kriterium für die Unterscheidung von Co-Polymeren und Klebharzen ist dabei regelmäßig die gewichtsmittlere Molmasse, die sich zwischen diesen Verbindungen erheblich unterscheidet. Bevorzugt ist bezüglich dieser gewichtsmittleren Molmasse ein erfindungsgemäßes Haftklebeband, wobei das eine oder die mehreren Co-Polymere eine gewichtsmittlere Molmasse M_{W} von 60.000 g/mol oder mehr, bevorzugt von 90.000 g/mol oder mehr, aufweisen, und/oder wobei das eine oder die mehreren Klebharze eine gewichtsmittlere Molmasse M_{W} von 10.000 g/mol oder weniger, bevorzugt von 5.000 g/mol oder weniger, besonders bevorzugt von 1.000 g/mol oder weniger, aufweisen. Die Bestimmung der gewichtsmittleren Molmasse erfolgt dabei an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Ä, 8,0 mm * 50 mm (Angaben hier und im Folgenden in der Reihenfolge: Typ, Partikelgröße, Porosität, Innendurchmesser * Länge; 1 Å = 10⁻¹⁰ m) verwendet. Zur Auftrennung wird eine Kombination der Säulen des Typs PSS-SDV, 5 µm, 10³ Ä sowie 10⁵ Ä und 10⁶ Ä mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PS-Standards (Polystyrol-Kalibrierung).

Nach Einschätzung des Erfinders kann der Fachmann aus den zwei als geeignet identifizierten Klebmassentypen eine Auswahl treffen, die im Wesentlichen von den Anwendungserfordernissen des vom Fachmann angestrebten Einsatzzweckes abhängen wird. Sowohl Poly(meth)acrylat basierte Klebemassen als auch Kautschuk basierte Klebemassen sind dabei in Abhängigkeit von den Anwendungserfordernissen vorteilhaft, sodass die entsprechenden Ausgestaltungen auch jeweils für sich genommen bevorzugt sind.

Bevorzugt ist somit zunächst ein erfindungsgemäßes Haftklebeband, wobei die (Co-)Polymere ausgewählt sind aus der Gruppe bestehend aus Poly(meth)acrylaten. Besonders bevorzugt ist dabei ein erfindungsgemäßes Haftklebeband, wobei die Poly(meth)acrylate ausgewählt sind aus der Gruppe bestehend aus Acrylaten, bevorzugt ausgewählt sind aus der Gruppe bestehend aus n-Butylacrylat und 2-Ethylhexylacrylat.

Im Rahmen der vorliegenden Erfindung umfasst der Ausdruck "Poly(meth)acrylate" in Übereinstimmung mit dem fachmännischen Verständnis Polyacrylate und Polymethacrylate sowie Copolymere dieser Polymere. Poly(meth)acrylate können kleinere Mengen an Monomereinheiten enthalten, die sich nicht aus (Meth)acrylaten ableiten. Unter einem "Poly(meth)acrylat" wird im Rahmen der vorliegenden Erfindung entsprechend ein (Co-)Polymer verstanden, dessen Monomerbasis zu einem Massenanteil von 70 % oder mehr, bevorzugt 90 % oder mehr, besonders bevorzugt 98 % oder mehr, aus Monomeren besteht, die ausgewählt sind aus der Gruppe bestehend aus Acrylsäure, Methacrylsäure, Acrylsäureestern und Methacrylsäureestern, bezogen auf die Masse der Monomerbasis.

Beim Einsatz von Poly(meth)acrylaten erachten es die Erfinder mit Blick auf den CO₂-Fußabdruck und die Abhängigkeit von fossilen Ressourcen als besonders bevorzugt, wenn die eingesetzten Poly(meth)acrylate möglichst weitgehend ebenfalls aus nachwachsenden Rohstoffen hergestellt sind. In Kombination mit Trägerschichten aus Polyethylenfuranoat ergeben sich somit besonders nachhaltige erfindungsgemäße Haftklebebänder. Bevorzugte Acrylatmononomere aus nachwachsenden Rohstoffen sind z.B. i-Amylacrylat, n-Heptylacrylat, und 2-Octylacrylat. Weitere Hintergründe zu Poly(met)acrylaten aus nachwachsenden Rohstoffen sind beispielsweise in der WO 2022034247 A1 offenbart. Bevorzugt ist somit ein erfindungsgemäßes Haftklebeband, wobei die Poly(meth)acrylate ausgewählt sind aus der Gruppe bestehend aus Poly(meth)acrylaten, welche zu 50 % oder mehr, bevorzugt zu 70 % oder mehr, besonders bevorzugt zu 90 % oder mehr, ganz besonders bevorzugt zu 95 % oder mehr, aus nachwachsenden Rohstoffen, bevorzugt pflanzlichen Rohstoffen, hergestellt sind, bezogen auf die Masse der Poly(meth)acrylate, bestimmt gemäß ASTMD 6866-22. Besonders bevorzugt ist insoweit ein erfindungsgemäßes Haftklebeband, wobei die (Co-)Polymere ausgewählt sind aus der Gruppe bestehend aus biobasierten Poly(meth)acrylate, insbesondere Poly(meth)acrylate, aus i-Amylacrylat, n-Heptylacrylat, und 2-Octylacrylat. Das Poly(meth)acrylat kann wie vorstehend beschrieben in der Haftklebemasse zusätzlich mit Klebharzen, vorzugsweise Derivate von Naturharzen, wie z.B. Pinen-, Inden-, Polyterpen und Kolophoniumharzen, abgemischt sein.

Neben Poly(meth)acrylaten zeigen auch Kautschuk basierte Haftklebemassen bei der Kombination mit PEF basierten Trägerschichten ausgezeichnete Eigenschaften. Auch für sich bevorzugt ist entsprechend ein erfindungsgemäßes Haftklebeband, wobei die (Co-)Polymere ausgewählt sind aus der Gruppe bestehend aus Dienkautschuken.

Dem Erfinder ist es insoweit gelungen, Dienkautschuke zu identifizieren, welche sich besonders gut für den Einsatz in erfindungsgemäßen Haftklebebändern eignen. Unter dem Gesichtspunkt einer möglichst vorteilhaften Nachhaltigkeit sieht der Erfinder insbesondere die Verwendung von Naturkautschuk als besonders vorteilhaft an. Bevorzugt ist nämlich ein erfindungsgemäßes Haftklebeband, wobei die Dienkautschuke ausgewählt sind aus der Gruppe bestehend aus Naturkautschuk und Synthesekautschuken, beispielsweise Styrol-haltigen Blockcopolymeren, insbesondere Styrol-Isopren-Styrol-Blockcopolymeren und/oder Styrol-Butadien-Styrol-Blockcopolymeren, wobei die Dienkautschuke bevorzugt ausgewählt sind aus der Gruppe bestehend aus Naturkautschuk. Besonders bevorzugt ist dabei ein erfindungsgemäßes Haftklebeband, wobei die Haftklebemasse als (Co-)Polymer Naturkautschuk umfasst, bevorzugt in einem Massenanteil von 50 % oder mehr, bevorzugt von 70 % oder mehr, besonders bevorzugt von 90 % oder mehr, ganz besonders bevorzugt von im Wesentlichen 100 %, bezogen auf die kombinierte Masse der (Co-)Polymere

Durch die vorteilhafte Möglichkeit, sowohl die Trägerschicht als auch die Haftklebemasse der Klebeschicht aus nachwachsenden Rohstoffen herzustellen, insbesondere durch den Einsatz von Naturkautschuk oder Poly(meth)acrylaten aus nachwachsenden Rohstoffen in der Klebemasse, ergibt sich die Möglichkeit, vorteilhafte erfindungsgemäße Haftklebebänder zu erhalten, welche auch insgesamt zu weit überwiegenden Teilen aus nachwachsenden Rohstoffen hergestellt sind und entsprechend einen besonders vorteilhaften CO₂-Fußabdruck und in der Herstellung einen geringen Bedarf an fossilen Ressourcen erfordern. Bevorzugt ist entsprechend ein erfindungsgemäßes Haftklebeband, wobei das Haftklebeband zu 70 % oder mehr, bevorzugt zu 80 % oder mehr, besonders bevorzugt zu 90 % oder mehr, ganz besonders bevorzugt zu 95 % oder mehr, aus nachwachsenden Rohstoffen, bevorzugt pflanzlichen Rohstoffen, hergestellt ist, bezogen auf die Masse des Haftklebebands, bestimmt gemäß ASTMD 6866-22. Eine besonders vorteilhafte Ausgestaltung ergibt sich insoweit vor allem dann, wenn für entsprechende Haftklebemassen auch auf biobasierte Klebeharze zurückgegriffen wird, wie es vorstehend offenbart ist.

Es kann als Vorteil der erfindungsgemäß einzusetzenden Haftklebemassen gesehen werden, dass diese hinsichtlich der Anwesenheit von weiteren typischen Komponenten von Haftklebemassen sehr flexibel sind, wodurch es in vorteilhafter Weise möglich wird, die physikalisch-chemischen Eigenschaften besonders gezielt an die jeweiligen Anforderungen der jeweiligen Anwendungen anzupassen. Beispielhaft ist ein erfindungsgemäßes Haftklebeband, wobei die Haftklebemasse ein oder mehrere Weichmacher umfasst, bevorzugt in einem kombinierten Massenanteil von 10 % oder weniger, besonders bevorzugt von 5 % oder weniger, bezogen auf die Masse der Haftklebemasse. Beispielhaft ist zusätzlich oder alternativ ein erfindungsgemäßes Haftklebeband, wobei die Haftklebemasse ein oder mehrere Additive umfasst, wobei die Additive bevorzugt ausgewählt sind aus der Gruppe bestehend aus Alterungsschutzmitteln, UV-Schutzmitteln, Farbstoffen, Prozesshilfsmitteln, bezogen auf die Masse der Haftklebemasse.

Ein besonderer Fall der weiteren Komponenten, welche der Einstellung der Eigenschaften von Haftklebemassen dienen, sind unlösliche Füllstoffe, die der Haftklebemasse zugesetzt werden können, um eine gefüllte Haftklebemasse zu erhalten. Bei diesen handelt es sich beispielsweise um partikuläre Füllstoffe mit einem mittleren Partikeldurchmesser (D50) von 5 µm oder mehr, bevorzugt 10 µm oder mehr, besonders bevorzugt 20 µm oder mehr, die in der Haftklebemasse nicht löslich sind und in dieser entsprechend als Dispersion vorliegen oder um makroskopische Füllstoffe wie beispielsweise Fasern. Bevorzugt sind die unlöslichen Füllstoffe ausgewählt aus der Gruppe bestehend aus partikulären Füllstoffen. Besonders bevorzugt sind die unlöslichen Füllstoffe ausgewählt aus der Gruppe bestehend aus expandierbaren Polymerhohlkugeln, nicht expandierbaren Polymerhohlkugeln, Polymervollkugeln, Glashohlkugeln, Glasvollkugeln, keramische Hohlkugeln, keramischen Vollkugeln, Kohlenstoffvollkugeln und pulverförmigen anorganischen Verbindungen, beispielsweise Mineralien wie Kreide, d.h. Calciumcarbonat. In Frage kommen als unlösliche Füllstoffe beispielsweise jedoch auch Fasern, Gelege, Plättchen und Stäbchen aus in der Haftklebemasse unlöslichen Materialien. Durch ihre teilweise schon makroskopischen Abmessungen und die fehlende Löslichkeit haben diese zumeist keinen wesentlichen Einfluss auf die vorstehend offenbarten Zusammenhänge der Haftklebemasse und der Wechselwirkung mit der PEF basierten Trägerschicht. Entsprechend werden diese unlöslichen Füllstoffe im Rahmen der vorliegenden Erfindung nicht der Haftklebemasse zugerechnet und werden entsprechend bei der Berechnung von Massenanteilen relativ zur Masse der Haftklebemasse nicht berücksichtigt. Im Rahmen der vorliegenden Erfindung wird vielmehr definiert, dass der Zusatz von unlöslichen Füllstoffen zu einer Haftklebemasse in einer gefüllten Haftklebemasse resultiert. In diesem Fall handelt es sich folglich um ein erfindungsgemäßes Haftklebeband, wobei die Klebeschicht eine gefüllte Haftklebemasse umfasst, bestehend aus:
bb.1) der Haftklebemasse, und
bb.2) einem oder mehreren unlöslichen Füllstoffen,
wobei der kombinierte Massenanteil der unlöslichen Füllstoffe bevorzugt im Bereich von 0,5 bis 60 %, besonders bevorzugt im Bereich von 1 bis 50 %, ganz besonders bevorzugt im Bereich von 5 bis 40 %, liegt, bezogen auf die Masse der gefüllten Haftklebemasse.

Die erfindungsgemäßen Haftklebebänder können bis zur Anwendung beispielsweise mit einem sogenannten Trennliner bedeckt werden, welcher die Klebeschicht vor Verunreinigungen schützt und insbesondere auch eine gute Abrollbarkeit gewährleistet, was insbesondere für doppelseitige Klebebänder relevant ist. Beispielhaft ist entsprechend ein erfindungsgemäßes Haftklebeband, wobei das Haftklebeband eine auf der Klebeschicht angeordnete Trennschicht umfasst. Beispielhaft ist insoweit ein erfindungsgemäßes Haftklebeband, wobei die Trennschicht ein oder mehrere Materialien umfasst, die ausgewählt sind aus der Gruppe bestehend aus Polyethylenterephthalat, Polypropylen und Papier. Beispielhaft ist insoweit zudem auch ein erfindungsgemäßes Haftklebeband, wobei die Trennschicht ein- oder beidseitig mit einer Releaseschicht beschichtet ist, wobei die Releaseschicht bevorzugt eine Silikon-Releaseschicht ist, wobei die Silikon-Releaseschicht bevorzugt herstellbar ist durch Vernetzung eines vernetzbaren Silikonsystems umfassend ein oder mehrere Polysiloxane. Im Falle von einseitigen Klebebändern kann zweckmäßigerweise die von der Klebeschicht abgewandte Seite der Trägerschicht mit einer entsprechenden Releaseschicht beschichtet werden, wobei dies wiederum eine Siloxan basierte aber auch eine Carbamat basierte Releaseschicht sein kann.

Die Erfindung betrifft auch ein Verfahren zur Herstellung eines Haftklebebandes, bevorzugt eines erfindungsgemäßen Haftklebebandes, umfassend die Verfahrensschritte:
a) Herstellen oder Bereitstellen einer Trägermaterialzusammensetzung umfassend Polyethylenfuranoat,
b) Extrudieren der Trägermaterialzusammensetzung zum Erhalt eines extrudierten Trägermaterials,
c) Herstellen einer Materialfolie umfassend das extrudierte Trägermaterial, wobei die Materialfolie mono-axial oder bi-axial verstreckt wird, und
d) Beschichten der mono-axial oder bi-axial verstreckten Materialfolie mit einer Haftklebemasse zum Erhalt eines Haftklebebandes,
wobei die Haftklebemasse ein oder mehrere (Co-)Polymere umfasst, die ausgewählt sind aus der Gruppe bestehend aus Dienkautschuken und Poly(meth)acrylaten.

Aus den vorstehenden Ausführungen zum Haftklebeband ist für den Fachmann zwanglos ersichtlich, dass das Beschichten in Verfahrensschritt d) ein einseitiges oder beidseitiges Beschichten sein kann. Ebenso kann das erfindungsgemäße Verfahren auch dass Anordnen einer Trennschicht auf der Klebeschicht und/oder die Ausrüstung der von der Klebeschicht abgewandten Seite der Trägerschicht mit einer Release-Schicht umfassen.

Der Erfinder schlägt für das zur Herstellung verwendete Verfahren besonders geeignete Verfahrensparameter vor, mit denen sich besonders vorteilhafte erfindungsgemäße Haftklebebänder erhalten lassen.

Bevorzugt ist nämlich zunächst ein erfindungsgemäßes Verfahren, wobei die Trägermaterialzusammensetzung vor dem Extrudieren getrocknet wird, bevorzugt bei einer Temperatur im Bereich von 70 bis 90 °C, besonders bevorzugt für eine Zeit im Bereich von 3 bis 6 h.

Bevorzugt ist auch ein erfindungsgemäßes Verfahren, wobei das Extrudieren bei einer Temperatur im Bereich von 260 bis 300 °C, bevorzugt im Bereich von 270 bis 290 °C, erfolgt.

Bevorzugt ist ebenfalls ein erfindungsgemäßes Verfahren, wobei die Materialfolie eine Castfolie ist, wobei das Verstrecken bevorzugt durch die zur Herstellung verwendete Vorrichtung erfolgt. Bevorzugt ist alternativ ein erfindungsgemäßes Verfahren, wobei die Materialfolie eine Blasfolie ist, wobei das Verstrecken bevorzugt durch auf einer von der zur Herstellung verwendete Vorrichtung separaten Reckanlage erfolgt.

Bevorzugt ist zudem ein erfindungsgemäßes Verfahren, wobei die Materialfolie bi-axial verstreckt wird, bevorzugt in Maschinenrichtung und quer zur Maschinenrichtung. Besonders bevorzugt ist alternativ aber ein erfindungsgemäßes Verfahren, wobei die Materialfolie mono-axial verstreckt wird, bevorzugt in Maschinenrichtung.

Bevorzugt ist des Weiteren ein erfindungsgemäßes Verfahren, wobei das Verstrecken der Materialfolie bei einer Temperatur im Bereich von 70 bis 120 °C, bevorzugt im Bereich von 80 bis 110 °C, erfolgt, wobei im Falle einer bi-axialen Verstreckung das Verstrecken in Maschinenrichtung bevorzugt bei einer niedrigeren Temperatur erfolgt als das Verstrecken quer zur Maschinenrichtung.
der Materialfolie mit einem Streckverhältnis je Streckrichtung im Bereich von 1:1,25 bis 1:10, bevorzugt im Bereich von 1:1,5 bis 1:8, besonders bevorzugt im Bereich von 1:1,75 bis 1:7, ganz besonders bevorzugt im Bereich von 1:3 bis 1:6, erfolgt.

Bevorzugt ist darüber hinaus ein erfindungsgemäßes Verfahren, wobei das Beschichten der verstreckten Materialfolie mit der Haftklebemasse in einem lösungsmittelbasierten Verfahren erfolgt, bevorzugt unter Einsatz einer Dispersion, besonders bevorzugt unter Einsatz einer Dispersion in wässriger Lösung. Bevorzugt ist alternativ hierzu ein erfindungsgemäßes Verfahren, wobei das Beschichten der verstreckten Materialfolie mit der Haftklebemasse in einem Schmelzverfahren erfolgt.

Denkbar ist zudem ein erfindungsgemäßes Verfahren, wobei das Beschichten der verstreckten Materialfolie mit der Haftklebemasse eine Zwischenschicht zur Beeinflussung der Verbundfestigkeit zwischen der Klebeschicht und der Trägerschicht aufgebracht wird.

Bevorzugt ist auch ein erfindungsgemäßes Verfahren, wobei die Oberfläche der verstreckten Materialfolie vor dem Beschichten aktiviert wird, bevorzugt mittels Corona-Behandlung.

Bevorzugt ist gleichfalls ein erfindungsgemäßes Verfahren, wobei das Beschichten der verstreckten Materialfolie mit der Haftklebemasse das Ausformen der Klebeschicht mit einem Kommarakel und das Verdampfen von Lösungsmittel umfasst.

Offenbart wird im Rahmen der Erfindung auch die Verwendung einer mono-axial oder bi-axial verstreckten Materialfolie aus einem Trägermaterial umfassend Polyethylenfuranoat als Trägerschicht in Haftklebebändern mit einer Kautschuk basierten oder Poly(meth)acrylat basierten Haftklebemasse zur Verbesserung der Zugfestigkeit und Weiterreißfestigkeit und/oder zur Verringerung des Bedarfs an fossilen Rohstoffen und/oder zur Verringerung der Splice-Neigung.

Nachfolgend werden die Erfindung und bevorzugte Ausführungsformen der Erfindung unter Bezugnahme auf Experimente weiter erläutert und beschrieben.

### A. Herstellung der Muster

Es wurden fünf Beispiele E1 bis E5 und

### Beispiel E1:

Eine monoaxial versteckte Trägerschicht aus PEF wurde in einer Dicke von 36 µm hergestellt. Dazu wird das PEF Granulat (Film Grade, der Firma Avantium B.V.) in einem Einschnecken-Extruder bei einer Temperatur von 280 °C (nach vorherigem Trocknen in einem Granulattrockner bei 80 °C für 5 h) aufgeschmolzen, zu einer Flachfolie extrudiert, und über eine Reckanlage monoaxial bei 115 °C mit einem Streckverhältnis von 1:3,6 versteckt.

Die so hergestellte mono-axial orientierte Trägerschicht wurde mittels wässriger Beschichtung auf der einen Seite mit 0,8 g/m² Release Lack (Handelsname: Suncryl HP 114, Fa. Syntomer) beschichtet und auf der anderen Seite einer Coronabehandlung unterzogen.

Die derart behandelte Trägerschicht wird anschließend auf der mit Corona behandelten Seite mit einer Naturkautschuk-Haftklebmasse in einem lösemittelfreien Extrusionsprozess mit einem Flächengewicht von 25 g/m² laminiert. Die Naturkautschuk-Haftklebmasse wurde als gefüllte Haftklebemasse eingesetzt und umfasste in Massenanteilen bezogen auf die Gesamtmasse der gefüllten Haftklebemasse 46 % Naturkautschuk, 50 % eines Kolophoniumharzes (Handelsname: Foral 85, Fa. Eastman Chemicals) und 4 % Kreide.

### Beispiel E2:

Eine biaxial versteckte Trägerschicht aus PEF wurde in einer Dicke von 25 µm hergestellt. Dazu wird das PEF Granulat (Film Grade, der Firma Avantium B.V.) in einem Einschnecken-Extruder bei einer Temperatur von 280 °C (nach vorherigem Trocknen in einem Granulattrockner bei 80 °C für 5 h) aufgeschmolzen, zu einer Flachfolie extrudiert, und zunächst monoaxial bei 90 °C mit einem Streckverhältnis von 1:2,6 in Maschinenrichtung und anschließend bei 100 °C mit einem Streckverhältnis von 1:2,2 in Querrichtung versteckt.

Die so hergestellte bi-axial orientierte Trägerschicht wurde mittels wässriger Beschichtung auf der einen Seite mit 0,8 g/m² Release Lack (Handelsname: Suncryl HP 114, Fa. Syntomer) beschichtet und auf der anderen Seite einer Coronabehandlung unterzogen.

Die derart behandelte Trägerschicht wird anschließend auf der mit Corona behandelten Seite mit einer wässrigen Naturkautschuk-Haftklebmasse bestehend bezogen auf die Masse aus 50 % Naturkautschuk-Dispersion und 50 % Kolophoniumharz-Dispersion (Handelsname Snowtack 100, Fa. Akzo Nobel) mit einem Kommarakel beschichtet und in Trockenkanal bei 100°C getrocknet und anschließend zu einer Klebebandrolle aufgerollt. Das Auftragsgewicht der Naturkautschuk-Haftklebemasse nach dem Trocknen beträgt 25 g/m².

### Beispiel E3

Analog zu dem für Beispiel E2 beschriebenen Verfahren wurde eine biaxial versteckte Trägerschicht aus PEF mit einer Dicke von 12 µm hergestellt, die jedoch nicht mit einer Release-Schicht versehen wurde, sondern beidseitig einer Coronabehandlung unterzogen wurde. Die so hergestellte Trägerschicht wurde nach der Coronabehandlung beidseitig mit einer Acrylat basierten Haftklebemasse, deren Polyacrylate aus nachwachsenden Rohstoffen hergestellt wurden, beschichtet. Die Acrylat basierten Haftklebemasse bestand bezogen auf die Masse aus 60 % Acrylat-Copolymer, 39,5 % Kolophoniumharz (Handelsname: Foral 85, Fa. Eastman Chemicals) und 0,5 % Tetraglycidyl meta-Xylenediamine (Handelsname: Erisys GA-240, Fa. Huntsman). Das Acrylat-Copolymer basierte auf einer Monomermischung bestehend bezogen auf die Masse aus 22 % Isobutylacrylat, 65 % 2-Octylacrylat, 10 % Methylacrylat und 3 % Acrylsäure. Der Massenanteil an Substanzen aus nachwachsenden Rohstoffen in der Haftklebemasse betrug 70 %. Die Beschichtung erfolgte jeweils aus der Schmelze mit einem Flächengewicht von 95 g/m², wobei die so erhaltene Klebeschicht mit einem Trennpapier abgedeckt wurde.

### Beispiel E4

Analog zu dem für Beispiel E2 beschriebenen Verfahren wurde eine biaxial versteckte Trägerschicht aus PEF mit einer Dicke von 190 µm hergestellt. Die so hergestellte Trägerschicht wurde nach der Coronabehandlung einseitig mit einer Acrylat basierten Haftklebemasse beschichtet. Die Acrylat basierten Haftklebemasse bestand in Massenanteilen bezogen auf die Gesamtmasse der Haftklebemasse aus 70 % eines Acrylat-Copolymers basierend auf einer Monomermischung aus 49 % n-Butylacrylat, 48 % 2-Ethylhexylacrylat und 3 % Acrylsäure, sowie 30 % Kolophoniumharz (Handelsname: Foral 85, Fa. Eastman Chemicals). Die Beschichtung erfolgte aus der Schmelze mit einem Flächengewicht von 75 g/m², wobei die so erhaltene Klebeschicht mit einem Trennpapier abgedeckt wurde.

### Beispiel E5

Analog zu dem für Beispiel E2 beschriebenen Verfahren wurde eine biaxial versteckte Trägerschicht aus PEF mit einer Dicke von 150 µm hergestellt, wobei jedoch ein etwas geringeres Verstreckungsverhältnis eingestellt wurde (md: 1:2 und cd 1:1,5). Die so hergestellte Trägerschicht wurde nach der Coronabehandlung einseitig mit einer Acrylat basierten Haftklebemasse beschichtet. Die Acrylat basierten Haftklebemasse bestand in Massenanteilen bezogen auf die Gesamtmasse der Haftklebemasse aus 70 % eines Acrylat-Copolymers basierend auf einer Monomermischung aus 49 % n-Butylacrylat, 48 % 2-Ethylhexylacrylat und 3 % Acrylsäure, sowie 30 % Kolophoniumharz (Handelsname: Foral 85, Fa. Eastman Chemicals). Die Beschichtung erfolgte aus der Schmelze mit einem Flächengewicht von 75 g/m², wobei die so erhaltene Klebeschicht mit einem Trennpapier abgedeckt wurde.

Als Vergleichsbeispiele V1 bis V6 wurden kommerziell erhältliche Haftklebebänder eingesetzt.

### Vergleichsbeispiel V1:

Mono-axial orientierte Polypropylen Trägerschicht mit einer Dicke von 85 µm und einer Naturkautschuk basierten Haftklebemasse, mit einem Flächengewicht von 22 g/m² (Handelsname: Tesa 64294, Fa. tesa).

### Vergleichsbeispiel V2:

Bi-axial orientierte PET Trägerschicht mit einer Dicke von 36 µm und einer Naturkautschuk basierten Haftklebemasse, mit einem Flächengewicht von 22 g/m² (Handelsname: Tesa 64260, Fa. tesa).

### Vergleichsbeispiel V3:

Mono-axial orientierte PET Trägerschicht mit einer Dicke von 36 µm und einer Naturkautschuk basierten Haftklebemasse, mit einem Flächengewicht von 22 g/m² (Handelsname: Tesa 64280, Fa. tesa).

### Vergleichsbeispiel V4:

Bi-axial orientierte Polypropylen Trägerschicht mit einer Dicke von 25 µm und einer Acrylat-Dispersion basierten Haftklebemasse, mit einem Flächengewicht von 22 g/m² (Handelsname: Tesa 4024, Fa. tesa).

### Vergleichsbeispiel V5:

Bi-axial orientierte PET Trägerschicht mit einer Dicke von 12 µm und einer beidseitigen Polyacrylat basierten Haftklebemasse, mit einem Flächengewicht von jeweils 95 g/m² (Handelsname: Tesa 4965, Fa. tesa).

### Vergleichsbeispiel V6:

Bi-axial orientierte Recyclat-PET-Trägerschicht mit einer Dicke von 190 µm und einer Polyacrylat basierten Haftklebemasse, mit einem Flächengewicht von 75 g/m² (Handelsname: Tesa 64294, Fa. tesa).

### B. Durchgeführte Versuche:

An den wie vorstehend beschrieben hergestellten Mustern wurden einer oder mehrere der folgenden Test durchgeführt. Die Messungen werden (sofern nichts anderes angegeben ist) bei einem Prüfklima von 23 ± 1 °C und 50 ± 5 % rel. Luftfeuchte durchgeführt.

### Mechanische Untersuchungen:

Die mechanischen Eigenschaften werden in einem Zug-/Dehnungsversuch bestimmt. Das Zugdehnungsverhalten wird an Prüflingen vom Typ 2 (rechteckige, 150 mm lange und nach Möglichkeit 15 mm breite Prüfstreifen) nach DIN EN ISO 527-3/2/300 mit einer Prüfgeschwindigkeit von 300 mm/min, einer Einspannlänge von 100 mm und einer Vorkraft von 0,3 N/cm ermittelt, wobei Muster zur Ermittlung der Daten mit scharfen Klingen zugeschnitten werden.

Das Zugdehnungsverhalten wird, wenn nicht anders angegeben, in Maschinenrichtung (MD, Laufrichtung) geprüft. Die Zugfestigkeit wird in N/Streifenbreite in cm und die Bruchdehnung in % ausgedrückt. Die Kraft längs bei 1% Dehnung (F1%-Wert) wird in N/Streifenbreite in cm und in N/Streifenquerschnitt in mm² angegeben. Die Prüfergebnisse, insbesondere die Bruchdehnung werden durch eine hinreichende Zahl von Messungen statistisch abzusichern.

### Vibrationsprüfung:

Die Vibrationsprüfung erfolgte gemäß DIN EN 60068-2-6:2008 (Beanspruchungsart: Sinus; Beschleunigung; 1G; Frequenzbereich: 5 bis 50 Hz; Sweep Time: 1 Oct./min; Testdauer horizontal: 10 Sweeps; Testdauer vertikal: 40 Sweeps). Dabei werden 6 unterschietliche (definierte) Stellen im Kühlschrank (Fronttür außen, Gemüsefach, Butterfach, Türfächer, Zwischenböden, Gefrierfach) mit dem Testklebeband verklebt.

Die Bewertung erfolgt mit einer qualitativen Skala von ++ (Sehr gut bestanden, hält auch an sehr beanspruchten Stelle), + (bestanden, reißt nur an einer sehr beanspruchten Stelle), und - - (nicht bestanden, tape reißt an Spalten und Kanten).

### Weiterreißfestigkeit:

Die Weiterreißfestigkeit ist die Kraft in N/cm, die benötigt wird, um einen Probenkörper nach festgelegtem Verfahren weiterzureißen. Die Messung erfolgt nach DIN EN ISO 6383-2:2004 (Teil 2: Elmendorf-Verfahren (ISO 6383-2:1983)). Es wird ein rechteckiger Probenkörper verwendet. Die Prüfergebnisse werden ebenfalls durch eine hinreichende Zahl von Messungen statistisch abgesichert.

### Festigkeits-Test (Shredding):

Für den Festigkeits-Test (Shredding) erfolgt die Verklebung des Prüflings auf PS Platten mit anschließender Lagerung der verklebten Muster für 24 h bei 40 °C. Anschließend erfolgt eine Rekonditionierung bei Raumtemperatur (klimatisierte Laborbedingung) für 2 h und abschließend eine Lagerung des Musters bei -10 °C für 24 h in der Tiefkühltruhe. Das Tape wird dann in der Kühltruhe im 180° Winkel erst langsam dann schnell abgezogen. Die Bewertung erfolgt visuell, ob und bei welcher Geschwindigkeit des Abziehens es zum Splicen (Spalten) des Klebebands (Trägers) kommt.

Die Bewertung erfolgt mit einer qualitativen Skala von ++ (kein Shredding), - (Shredding/Abriss nur bei höheren Geschwindigkeiten) und - - (starkes Shredding bereits bei geringen Geschwindigkeiten).

### Test auf Spaltfestigkeit:

Für den Test auf Spaltfestigkeit werden die Muster auf der nichtklebenden Rückseite mit Corona behandelt und mit einer Acrylat-Haftklebemasse laminiert. Die so entstandenen doppelseitigen Klebebänder werden zu rechteckigen Prüflingen (20 mm x 3 mm) geschnitten und analog zu dem in DE 102017006359 A1 beschriebenen Verfahren zur Bewertung des Spaltverhaltens geprüft.

### Durchstoßfestigkeit

Zur Prüfung der Durchstoßfestigkeit werden runde Stanzlinge des Prüflings mit einem Durchmesser von d = 50 mm auf ein Metallblech mit runden Ausstanzungen (Durchmesser d = 30 mm) mittig verklebt, so dass das Loch komplett abgedeckt ist. Die Muster werden nach der Verklebung für ca. 24 h bei 23 ± 1 °C, 50 ± 5 % rel. Feuchte konditioniert. In einer Zugprüfmaschine z.B. der Firma Zwick GmbH wird anschließend ein Stempel mit Durchmesser d - 20 mm mit einer Geschwindigkeit von 300 mm/min mittig in das verklebte Loch gefahren (Eindringtiefe 20 mm). Es wird die Kraft in N bestimmt, bei der das Muster durchstoßen wird.

### C. Ergebnisse

Die Ergebnisse sind in den nachfolgenden Tabelle 1 und 2 zusammengefasst.

**Tabelle 1 - Ergebnisse der durchgeführten Versuche - Teil 1**

| | E1 | V1 | V2 | V3 | E2 | V4 |
|---|---|---|---|---|---|---|
| Träger | 36 µm MOPEF | 85 µm MOPP | 36 µm BOPET | 36 µm MOPET | 25 µm BOPEF | 25 µm BOPP |
| Klebmasse | 25 g/m² NK | 22 g/m² NK | 22 g/m² NK | 22 g/m² NK | 22 g/m² NK | 22 g/m² NK |
| Reißkraft / (N/cm) | 185 | 240 | 57 | 134 | 68 | 43 |
| Kraft bei 1% Dehnung / (N/cm) | 43 | 23 | 15 | 35 | 14 | 6,5 |
| Festigkeit bei 1% Dehnung / (N/mm²) | 119,4 | 27 | 41,7 | 97,2 | 56 | 26 |
| Bruchdehnung /% | 23 | 35 | 136 | 31 | 152 | 166 |
| Weiterreißfestigkeit / (N/cm) | 6,2 | 2,6 | 3,8 | 5,6 | 2,8 | 3,3 |
| Spaltfestigkeit (% von 10 Messungen) | 0 | 100 | 90 | 40 | n.b. | n.b. |
| Festigkeit (Shredding) | + + | - - | - - | + + | n.b. | n.b. |
| Vibrationstest | ++ | - - | - - | + | n.b. | n.b. |
| Anteil nachwachsender Rohstoffe /% | 88 | 0 | 0 | 0 | 85 | 0 |

**Tabelle 2 - Ergebnisse der durchgeführten Versuche - Teil 2**

| | E3 | V5 | E4 | E5 | V6 |
|---|---|---|---|---|---|
| Träger | 12 µm BOPEF | 12 µm BOPET | 190 µm BOPEF | 150 µm BOPEF | 190 µm BOPET |
| Klebmasse | 2x 95 g/m² BioAc | 2x 95 g/m² Ac | 75g/m² Ac | 75g/m² Ac | 75g/m² Ac |
| Reißkraft / (N/cm) | 33 | 29 | 311 | 249 | 253 |
| Kraft bei 1% Dehnung / (N/cm) | 7,3 | 6,8 | 98 | 79 | 82 |
| Festigkeit bei 1% Dehnung / (N/mm²) | 60,8 | 56,7 | 51,6 | 52,7 | 43,2 |
| Bruchdehnung /% | 87 | 103 | 125 | 131 | 140 |
| Weiterreißfestig. / (N/cm) | 1,3 | 1,1 | 17,3 | 14,1 | 15,4 |
| Durchstoßtest /N | n.b. | n.b. | 389 | 358 | 362 |
| Anteil nachwachsender Rohstoffe /% | 65 | 0 | 68 | 64 | 0 |

### D. Bewertung:

Die in Tabelle 1 und 2 zusammengefassten Ergebnisse verdeutlichen, dass die erfindungsgemäßen Haftklebebänder in vorteilhafter Weise zu einem hohen Anteil aus nachwachsenden Rohstoffen hergestellt werden können und dabei über ausgezeichnete mechanische Eigenschaften verfügen. Insbesondere werden Ausgezeichnete Zug- und Weiterreißfestigkeiten sowie sehr gute Ergebnisse im Durchstoßtest erzielt.

Zudem zeigt sich für erfindungsgemäße Haftklebebänder überraschenderweise weder Shredding noch Splicing, wobei die erfindungsgemäßen Haftklebebänder auch den Vibrationstest zuverlässig bestehen.

## Patentansprüche

1. Haftklebeband, umfassend:
i) eine Trägerschicht aus einem Trägermaterial, wobei das Trägermaterial Polyethylenfuranoat umfasst, und
ii) zumindest eine auf der Trägerschicht angeordnete Klebeschicht, umfassend eine Haftklebemasse,
wobei die Haftklebemasse ein oder mehrere (Co-)Polymere umfasst, die ausgewählt sind aus der Gruppe bestehend aus Dienkautschuken und Poly(meth)acrylaten, und
wobei die Trägerschicht eine mono-axial oder bi-axial orientierte Trägerschicht ist.

2. Haftklebeband nach Anspruch 1, wobei die Trägerschicht eine mono-axial verstreckte Trägerschicht ist.

3. Haftklebeband nach Anspruch 2, wobei die Trägerschicht eine Zugfestigkeit bei 1 % Dehnung von 90 N/mm² oder mehr aufweist.

4. Haftklebeband nach Anspruch 1, wobei die Trägerschicht eine bi-axial verstreckte Trägerschicht ist.

5. Haftklebeband nach Anspruch 4, wobei die Trägerschicht eine Zugfestigkeit bei 1 % Dehnung von 40 N/mm² oder mehr aufweist.

6. Haftklebeband nach einem der Ansprüche 1 bis 5, wobei das Trägermaterial zu 50 % oder mehr aus recyceltem Material besteht, bezogen auf die Masse des Trägermaterials.

7. Haftklebeband nach einem der Ansprüche 1 bis 6, wobei das Trägermaterial zu 50 % oder mehr, bevorzugt zu 80 % oder mehr, besonders bevorzugt zu 95 % oder mehr, ganz besonders aus nachwachsenden Rohstoffen, bevorzugt pflanzlichen Rohstoffen, hergestellt ist, bezogen auf die Masse des Trägermaterials.

8. Haftklebeband nach einem der Ansprüche 1 bis 7, wobei die (Co-)Polymere ausgewählt sind aus der Gruppe bestehend aus Dienkautschuken.

9. Haftklebeband nach einem der Ansprüche 1 bis 7, wobei die (Co-)Polymere ausgewählt sind aus der Gruppe bestehend aus Poly(meth)acrylaten.

10. Verfahren zur Herstellung eines Haftklebebandes, umfassend die Verfahrensschritte:
a) Herstellen oder Bereitstellen einer Trägermaterialzusammensetzung umfassend Polyethylenfuranoat,
b) Extrudieren der Trägermaterialzusammensetzung zum Erhalt eines extrudierten Trägermaterials,
c) Herstellen einer Materialfolie umfassend das extrudierte Trägermaterial, wobei die Materialfolie mono-axial oder bi-axial verstreckt wird, und
d) Beschichten der mono-axial oder bi-axial verstreckten Materialfolie mit einer Haftklebemasse zum Erhalt eines Haftklebebandes,
wobei die Haftklebemasse ein oder mehrere (Co-)Polymere umfasst, die ausgewählt sind aus der Gruppe bestehend aus Dienkautschuken und Poly(meth)acrylaten.
